# FASCICULE DE BREVET EUROPEEN

(11) **EP 3 546 766 B1**
(45) Date de publication et mention de la délivrance du brevet: **30.12.2020**
(21) Numéro de dépôt: 19162580.5
(22) Date de dépôt: 13.03.2019
(51) Int. Cl.: F16B 5/06, F16B 19/10, F16F 1/373, F16B 21/06, F16B 21/08

(54) **DISPOSITIF DE FIXATION AVEC UN SILENTBLOC ET UN RIVET DE FIXATION LAISSANT LIBRE LE SILENTBLOC DANS SA PARTIE SUPÉRIEURE**
BEFESTIGUNGSVORRICHTUNG MIT EINEM SILENTBLOCK UND EINER BEFESTIGUNGSNIETE, DIE DEN OBEREN TEIL DES SILENTBLOCKS FREI LÄSST
ATTACHMENT DEVICE WITH A SILENT BLOCK AND AN ATTACHMENT RIVET LEAVING THE SILENT BLOCK FREE AT THE TOP

(30) Priorité: 29.03.2018 FR 1852732
(43) Date de publication de la demande: 02.10.2019
(73) Titulaire: A. Raymond et Cie, 38000 Grenoble (FR)
(72) Inventeur: BERNARD, Nicolas, 38210 St Quentin sur Isère (FR)
(74) Mandataire: Verriest, Philippe

(56) Documents cités:
- FR-A1- 2 807 480
- US-A- 3 611 861
- US-A- 4 276 806
- US-A- 5 007 779
- US-A- 5 052 663

## Description

### DOMAINE TECHNIQUE

La présente invention concerne un dispositif de fixation pour fixer un organe fonctionnel sur un support, le dispositif de fixation étant constitué d'un rivet de fixation apte à être fixé dans un orifice de montage ménagé dans le support et d'un silentbloc couplé au rivet de fixation et délimitant une zone de réception et de maintien apte à recevoir et maintenir une partie de l'organe fonctionnel

L'invention trouve une application notamment dans le domaine mécanique, en particulier dans le domaine des véhicules de transport terrestre comme par exemple le domaine automobile. Le dispositif de fixation peut par exemple être utilisé pour fixer un compresseur sur le support, le silentbloc permettant d'amortir les chocs et les vibrations entre le compresseur et le support.

### ETAT DE LA TECHNIQUE ANTERIEURE

Dans le domaine mécanique, en particulier dans le domaine des véhicules de transport terrestre, il est connu de fixer un organe fonctionnel sur un support par l'intermédiaire d'un silentbloc interposé entre le support et l'organe fonctionnel afin d'amortir les vibrations, les chocs ou les bruits.

L'organe fonctionnel à fixer peut être un compresseur, un groupe moto-ventilateur, un moteur, ou tout autre organe susceptible de présenter des vibrations ou des chocs à amortir vis-à-vis du support.

Actuellement, les montages existants prévoient que l'organe fonctionnel soit maintenu dans le silentbloc, par exemple au moyens d'une gorge externe, une vis traversant le silentbloc étant prévue afin de comprimer le silentbloc sur toute sa hauteur. Dans d'autres montages, la vis est remplacée par un rivet en plastique ayant une tige de verrouillage coulissante.

Une autre solution connue est décrite dans le document FR-A1-2807480, où le montage d'un groupe moto-ventilateur sur le radiateur d'un véhicule automobile est assuré au moyen d'un silentbloc comprimé axialement par une tige elle-même maintenue dans une embase par un système quart de tour à baïonnette.

Ces techniques présentent l'inconvénient que le comportement et les performances du silentbloc sont susceptibles d'être perturbés par la fixation du silentbloc au support.

### EXPOSE DE L'INVENTION

La présente invention a pour but de proposer un dispositif de fixation pour fixer un organe fonctionnel sur un support qui réponde aux problèmes ci-dessus.

Notamment, le but de l'invention est de proposer un dispositif de fixation pour fixer un organe fonctionnel sur un support qui réponde à au moins l'un des objectifs suivants :
- être économique,
- favoriser un montage aisé,
- présenter de très bonnes performances d'amortissement.

Ce but peut être atteint grâce à la mise en œuvre d'un dispositif de fixation pour fixer un organe fonctionnel sur un support, le dispositif de fixation étant constitué d'un rivet de fixation apte à être fixé dans un orifice de montage ménagé dans le support et d'un silentbloc couplé au rivet de fixation et délimitant une zone de réception et de maintien apte à recevoir et maintenir une partie de l'organe fonctionnel, le rivet de fixation comprenant :
- une pièce interne mâle comprenant une tige de verrouillage,
- et une pièce externe femelle de forme tubulaire comprenant :
   - une portion inférieure d'appui, agencée dans une partie inférieure de la pièce externe femelle et s'étendant radialement en saillie de la pièce externe femelle de sorte à pouvoir venir en appui contre une face supérieure du support,
   - une pluralité d'ailes mobiles délimitant intérieurement entre elles un passage axial apte à recevoir la tige de verrouillage avec une possibilité de coulissement selon un axe longitudinal du passage axial, les ailes mobiles étant réparties angulairement autour du passage axial en étant articulées dans une partie supérieure de la pièce externe femelle du rivet de fixation de sorte que chaque aile mobile présente une capacité de débattement radial d'une configuration radialement initiale vers une configuration radialement écartée, ce débattement étant commandé par un déplacement longitudinal de la tige de verrouillage de la pièce interne mâle d'une position relevée de déverrouillage vers une position abaissée de verrouillage,
   - des éléments de contre-appui respectivement solidaires des ailes mobiles et configurés de sorte à venir en appui contre une face inférieure du support lorsque chaque aile mobile occupe sa configuration radialement écartée,
   dans lequel le silentbloc présente une forme tubulaire délimitant un passage traversant pour être monté axialement le long de la pièce externe femelle du rivet de fixation et s'étende autour de la pièce externe femelle du rivet de fixation,
   dans lequel la partie inférieure de la pièce externe femelle du rivet de fixation délimite des éléments de blocage, agencés à proximité de la portion inférieure d'appui, s'insérant dans le passage traversant du silentbloc et coopérant avec le silentbloc de sorte à conférer une liaison encastrement entre le silentbloc et la pièce externe femelle du rivet de fixation, cette liaison encastrement étant localisée dans la partie inférieure de la pièce externe femelle du rivet de fixation et assurant un blocage du silentbloc radialement et longitudinalement par rapport à la pièce externe femelle du rivet de fixation,

Certains aspects préférés du dispositif de fixation mais non limitatifs sont les suivants.

Le silentbloc est libre de se déplacer longitudinalement par rapport à la pièce externe femelle du rivet de fixation dans la partie supérieure de la pièce externe femelle du rivet de fixation.

Le silentbloc est libre de se déplacer radialement par rapport à la pièce externe femelle du rivet de fixation dans la partie supérieure de la pièce externe femelle du rivet de fixation.

Les éléments de blocage sont solidaires d'au moins l'une des ailes mobiles.

Les éléments de blocage se présentent comme un relief s'étendant radialement vers l'extérieur en saillie à partir de la face externe de chaque aile mobile, ledit relief s'étendant uniquement sur une fraction de la hauteur de chaque aile mobile comptée entre la portion inférieure d'appui et son articulation à la partie supérieure de la pièce externe femelle du rivet de fixation, ledit relief étant adjacent à la portion inférieure d'appui.

La partie supérieure de la pièce externe femelle du rivet de fixation comprend une portion supérieure d'appui s'étendant radialement en saillie de la pièce externe de sorte à emprisonner le silentbloc entre la portion supérieure d'appui et la portion inférieure d'appui et la hauteur du silentbloc est strictement inférieure à la distance interposée entre la portion supérieure d'appui et la portion inférieure d'appui de sorte à ménager un jeu fonctionnel entre l'extrémité supérieure du silentbloc et la portion supérieure d'appui.

La portion inférieure d'appui est solidaire des ailes mobiles et comprend un rebord s'étendant radialement vers l'extérieur en saillie à partir de la face externe de chaque aile mobile, les rebords étant discontinus à l'égard d'une direction circonférentielle à l'axe longitudinal du passage axial de la pièce externe femelle du rivet de fixation.

### BREVE DESCRIPTION DES DESSINS

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
la figure 1 est une vue en perspective d'un exemple de rivet de fixation utilisé pour la constitution d'un dispositif de fixation selon l'invention.
la figure 2 représente en perspective le dispositif de fixation à l'état monté sur un support et assurant le maintien d'un compresseur.

### EXPOSE DETAILLE DE MODES DE REALISATION PARTICULIERS

L'invention concerne un dispositif de fixation adapté pour réaliser la fixation d'un organe fonctionnel 100 sur un support 200. Le dispositif de fixation est constitué d'un rivet de fixation 10 apte à être fixé dans un orifice de montage ménagé dans le support 200 et d'un silentbloc 50 couplé au rivet de fixation 10.

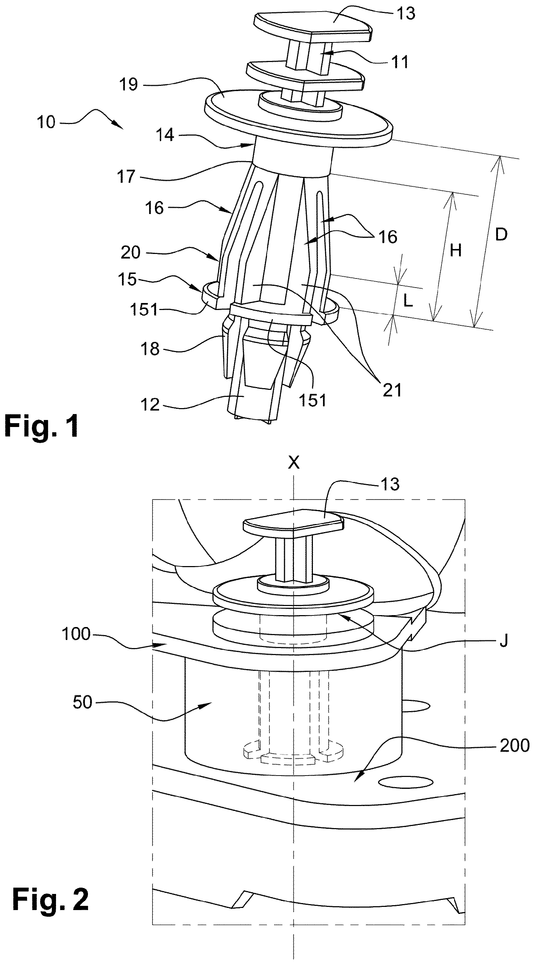

Le silentbloc 50 délimite une zone de réception et de maintien apte à recevoir et maintenir une partie de l'organe fonctionnel 100. Comme cela est représenté sur la figure 2, la zone de réception et de maintien correspond par exemple à une gorge annulaire externe dans laquelle la partie de l'organe fonctionnel 100 vient s'emboiter élastiquement pour son maintien ultérieur. La figure 2 illustre la situation dans laquelle une partie de l'organe fonctionnel 100 est insérée dans la gorge annulaire externe.

L'organe fonctionnel 100 est notamment un compresseur, mais il peut indifféremment s'agir d'un groupe moto-ventilateur, d'un moteur, ou de tout autre organe susceptible de présenter des vibrations ou des chocs à amortir vis-à-vis du support 200.

De manière générale, le silentbloc 50 est un bloc élastiquement déformable en élastomère, ayant des propriétés d'amortissement et de grande extensibilité en présentant un allongement à la rupture élevé. Il est interposé entre le support 200 et l'organe fonctionnel 100 qui est fixé au support 200 par l'intermédiaire du dispositif de fixation décrit dans ce document, en offrant une possibilité de mouvement relatif entre le support 200 et l'organe fonctionnel 100 de très faible amplitude, pour absorber les vibrations, les chocs et les bruits.

Le rivet de fixation 10 est constitué par deux pièces indépendantes l'une de l'autre, chacune de ces deux pièces étant monobloc, à savoir une pièce interne mâle 11 et une pièce externe femelle 14 de forme tubulaire. Chacune de ces deux pièces 11, 14 est réalisée dans une matière plastique, ayant pour avantage un poids limité, une facilité de fabrication par moulage, une grande résistance face aux conditions de l'environnement, par exemple en terme de température ou d'humidité.

La pièce interne mâle 11 comprend une tige de verrouillage 12 dont une extrémité axiale est pourvue d'une tête d'actionnement 13, destinée à la manipulation de la tige de verrouillage 12.

La pièce externe femelle 14 comprend une portion inférieure d'appui 15, agencée dans une partie inférieure de la pièce externe femelle 14 et s'étendant radialement en saillie de la pièce externe femelle 14 de sorte à pouvoir venir en appui contre une face supérieure du support 200. La mise en appui de la portion inférieure d'appui 15 contre la face supérieure du support 200 est visible sur la figure 2.

La pièce externe femelle 14 comprend également une pluralité d'ailes mobiles 16 indépendantes les unes des autres. Les ailes mobiles 16 délimitent intérieurement entre elles un passage axial globalement allongé selon un axe longitudinal X. Le passage axial est adapté à la réception de la tige de verrouillage 12 avec une possibilité de coulissement selon l'axe longitudinal X.

Les ailes mobiles 16, par exemple au nombre de 4 dans l'exemple illustré bien que ce nombre puisse être égal à trois ou être supérieur à cinq, sont réparties angulairement autour du passage axial, c'est-à-dire autour de l'axe longitudinal X, selon un pas angulaire régulier ou non.

Chaque aile mobile 16 est articulée dans une partie supérieure de la pièce externe femelle 14 du rivet de fixation 10 au niveau d'une zone d'articulation 17 correspondante. Chaque aile mobile 16 présente une capacité de débattement radial, au moins pour passer d'une configuration radialement initiale, correspondant typiquement à une configuration radialement rétractée où les ailes mobiles 16 sont radialement resserrées les unes vers les autres concentriquement, vers une configuration radialement écartée. La tige de verrouillage 13 et les ailes mobiles 16 sont configurées pour coopérer entre elles durant le coulissement de la tige de verrouillage 13 selon l'axe longitudinal X. La manière de coopérer est telle que le débattement des ailes mobiles 16 par pivotement autour des zones d'articulation 17, pour passer de la configuration radialement initiale vers la configuration radialement écartée, est commandé par un déplacement longitudinal, i.e. selon l'axe longitudinal X, de la tige de verrouillage 13 de la pièce interne mâle 11 d'une position relevée de déverrouillage vers une position abaissée de verrouillage.

La partie supérieure et la partie inférieure de la pièce externe femelle 14 du rivet de fixation 10 correspondent à deux parties de la pièce externe femelle 14 décalées entre elles suivant l'axe longitudinal X, la partie dite « inférieure » étant celle destinée à être tournée du côté du support 200 en vue du montage de la pièce externe femelle 14, et donc du rivet de fixation 10 dans son ensemble, dans l'orifice de montage du support 200. A l'inverse, la partie dite « supérieure » de la pièce externe femelle 14 correspond à la partie opposée à la partie inférieure suivant l'axe longitudinal X, destinée à être à distance du support 200 lorsque la partie inférieure est montée dans l'orifice de montage du support 200.

Selon un mode de réalisation particulier non limitatif, comme cela est représenté sur les figures 1 et 2, la portion inférieure d'appui 15 est solidaire des ailes mobiles 16. Plus précisément, chaque aile mobile 16 comprend un rebord 151 s'étendant radialement vers l'extérieur en saillie à partir de la face externe de chaque aile mobile 16, les rebords 151 étant discontinus à l'égard d'une direction circonférentielle à l'axe longitudinal X du passage axial de la pièce externe femelle 14 du rivet de fixation 10. La portion inférieure d'appui 15 est constituée par la réunion des différents rebords 151 respectivement portés par les ailes mobiles 16.

La pièce externe femelle 14 comprend également des éléments de contre-appui 18 respectivement solidaires des ailes mobiles 16 et configurés de sorte à venir en appui contre une face inférieure du support 200 lorsque chaque aile mobile 16 occupe sa configuration radialement écartée.

Ainsi, la portion inférieure d'appui 15 de la pièce externe femelle 14 est d'abord mise en appui contre la face supérieure du support 200 à un moment où la tige de verrouillage 13 occupe sa position relevée de déverrouillage afin de placer chaque aile mobile 16 dans sa configuration radialement initiale. Puis la tige de verrouillage 13 est déplacée vers la position abaissée de verrouillage pour commander le déplacement de chaque aile mobile 16 vers la configuration radialement écartée, permettant aux éléments de contre-appui 18 de venir en appui contre la face inférieure du support 200. Autrement dit, le support 200 se trouve emprisonné entre la portion inférieure d'appui 15 et les éléments de contre-appui 18 lorsque la tige de verrouillage 13 est coulissée en direction du support 200 jusqu'à sa position abaissée de verrouillage.

A titre d'exemple, chaque élément de contre-appui 18 est constitué par un ergot de retenue axiale visible sur la figure 1, où chaque ergot de retenue s'étend radialement vers l'extérieur en saillie à partir de la face externe de chaque aile mobile 16 à un emplacement situé à l'extrémité distale des ailes mobiles 16, c'est-à-dire du côté opposé à l'extremité reliée à la zone d'articulation 17. Chaque ergot de retenue peut présenter un profil convergent à la manière d'un pan incliné en s'approchant de ladite extrémité distale afin de favoriser la pénétration de la pièce externe femelle 14 à travers l'orfice de montage ménagé dans le support 200.

Comme cela est visible sur la figure 2, le silentbloc 50 présente une forme tubulaire délimitant un passage traversant pour être monté axialement le long de la pièce externe femelle 14 du rivet de fixation 10 et s'étendre autour de la pièce externe femelle 14 du rivet de fixation 10. Le silentbloc 50 présente ainsi une forme générale cylindrique, délimitant intérieurement le passage traversant qui a la forme d'un tunnel rectiligne de section circulaire. L'élément de réception et de maintien est par contre agencée dans la face externe du silentbloc 50.

De manière très avantageuse, la partie inférieure de la pièce externe femelle 14 du rivet de fixation 10 délimite des éléments de blocage 20, agencés à proximité de la portion inférieure d'appui 15, s'insérant dans le passage traversant du silentbloc 50 et coopérant avec le silentbloc 50 de sorte à conférer une liaison encastrement locale entre le silentbloc 50 et la pièce externe femelle 14 du rivet de fixation 10, cette liaison encastrement étant localisée dans la partie inférieure de la pièce externe femelle 14 du rivet de fixation 10 et assurant un blocage du silentbloc 50 radialement et longitudinalement par rapport à la pièce externe femelle 14 du rivet de fixation 10.

Par contre, le silentbloc 50 est avantageusement libre de localement se déplacer longitudinalement par rapport à la pièce externe femelle 14 du rivet de fixation 10 dans la partie supérieure de la pièce externe femelle 14 du rivet de fixation 10. Il n'y a donc que dans la partie supérieure du silentbloc 50 que celui-ci est libre de se déplacer localement par rapport au rivet de fixation 10, le reste du silentbloc 50 étant encastré dans sa partie inférieure comme cela est expliqué ci-avant. Dans un mode particulier de réalisation non limitatif, le silentbloc 50 est libre de localement se déplacer également radialement par rapport à la pièce externe femelle 14 du rivet de fixation 10 dans la partie supérieure de la pièce externe femelle 14 du rivet de fixation 10.

Autrement dit, le silentbloc 50 est encastré uniquement au niveau de la partie inférieure du silentbloc 50, sous l'effet du blocage des éléments de blocage 20 de la pièce externe femelle 14 dans le tronçon inférieur du passage traversant. Par contre la partie supérieure du silentbloc 20 reste avantageusement libre, avec une possibilité locale du passage traversant, au niveau de son tronçon supérieur, de se déplacer axialement voire radialement par rapport à la pièce externe femelle 14. Préférentiellement, la zone de réception et de maintien ménagée à l'extérieur du silentbloc 50 est justement agencée dans la partie supérieure du silentbloc 50, ce qui permet de conférer une bonne capacité d'absorption des déplacements (chocs, vibrations etc...) de l'organe fonctionnel 100. Seule la partie inférieure du silentbloc 50 est contrainte et les perturbations de comportement du silentbloc 50 du fait de sa fixation sont ainsi limitées.

Selon un mode de réalisation particulier non limitatif, les éléments de blocage 20 sont solidaires d'au moins l'une des ailes mobiles 16, voire de toutes les ailes mobiles 16 que comporte le rivet de fixation 10 pour assurer le meilleur encastrement local possible du silentbloc 50 dans la partie inférieure.

Notamment, les éléments de blocage 20 peuvent se présenter comme un relief 21 s'étendant radialement vers l'extérieur en saillie à partir de la face externe de chaque aile mobile 16. Le relief 21 que présente chaque aile mobile 16 s'étend sur une longueur notée « L » égale à uniquement une fraction de la hauteur notée « H » de chaque aile mobile 16 comptée entre la portion inférieure d'appui 15 et sa zone d'articulation 17 par rapport à la partie supérieure de la pièce externe femelle 14 du rivet de fixation 10, ledit relief 21 étant adjacent à la portion inférieure d'appui 15.

Une manière simple et efficace de réaliser de tels reliefs 21 solidaires des ailes mobiles 16 est d'aménager au moins une nervure longitudinale qui s'étend le long de chaque aile mobile 16 uniquement sur une partie de sa hauteur H, du côté de la portion inférieure d'appui 15. La présence d'au moins une telle nervure longitudinale sur la face externe de chaque aile mobile 16 permet de conférer avantageusement un effet supplémentaire de rigidification de chaque aile mobile 16 afin de limiter sa capacité de déformation le long de sa hauteur H. Il n'en demeure pas moins que les reliefs 21 peuvent éventuellement adopter d'autres formes, comme par exemple des nervures orientées transversalement à la longueur des ailes mobiles 16, des formes massives, étoilées, etc...

Selon un mode de réalisation particulier non limitatif, la partie supérieure de la pièce externe femelle 14 du rivet de fixation comprend une portion supérieure d'appui 19, typiquement sous la forme d'une collerette radiale constitutive d'un épaulement supérieur, s'étendant radialement en saillie de la pièce externe femelle 14 de sorte à emprisonner axialement le silentbloc 50 entre la portion supérieure d'appui 19 et la portion inférieure d'appui 15.

Avantageusement, la hauteur du silentbloc, comptée suivant son axe de révolution lui-même orienté de manière coïncidente avec l'axe longitudinal X lorsque le silentbloc 50 est monté autour de la pièce externe femelle 14, est strictement inférieure à la distance notée « D » interposée entre la portion supérieure d'appui 19 et la portion inférieure d'appui 15 de sorte à ménager un jeu fonctionnel noté « J » entre l'extrémité supérieure du silentbloc 50 et la portion supérieure d'appui 19.

Le dispositif de fixation est économique, facile à mettre en œuvre et présente d'excellentes performances d'amortissement de vibrations, de chocs et de bruit entre l'organe fonctionnel 100 et le support 200.

## Revendications

1. Dispositif de fixation pour fixer un organe fonctionnel (100) sur un support (200), le dispositif de fixation étant constitué d'un rivet de fixation (10) apte à être fixé dans un orifice de montage ménagé dans le support (200) et d'un silentbloc (50) couplé au rivet de fixation (10) et délimitant une zone de réception et de maintien apte à recevoir et maintenir une partie de l'organe fonctionnel (100), le rivet de fixation (10) comprenant :
- une pièce interne mâle (11) comprenant une tige de verrouillage (12),
- et une pièce externe femelle (14) de forme tubulaire comprenant :
- une portion inférieure d'appui (15), agencée dans une partie inférieure de la pièce externe femelle (14) et s'étendant radialement en saillie de la pièce externe femelle (14) de sorte à pouvoir venir en appui contre une face supérieure du support (200),
- une pluralité d'ailes mobiles (16) délimitant intérieurement entre elles un passage axial apte à recevoir la tige de verrouillage (12) avec une possibilité de coulissement selon un axe longitudinal (X) du passage axial, les ailes mobiles (16) étant réparties angulairement autour du passage axial en étant articulées dans une partie supérieure de la pièce externe femelle (14) du rivet de fixation (10) de sorte que chaque aile mobile (16) présente une capacité de débattement radial d'une configuration radialement initiale vers une configuration radialement écartée, ce débattement étant commandé par un déplacement longitudinal de la tige de verrouillage (12) de la pièce interne mâle (11) d'une position relevée de déverrouillage vers une position abaissée de verrouillage,
- des éléments de contre-appui (18) respectivement solidaires des ailes mobiles (16) et configurés de sorte à venir en appui contre une face inférieure du support (200) lorsque chaque aile mobile (16) occupe sa configuration radialement écartée,
dans lequel le silentbloc (50) présente une forme tubulaire délimitant un passage traversant pour être monté axialement le long de la pièce externe femelle (14) du rivet de fixation (10) et s'étende autour de la pièce externe femelle (14) du rivet de fixation (10),
dans lequel la partie inférieure de la pièce externe femelle (14) du rivet de fixation (10) délimite des éléments de blocage (20), agencés à proximité de la portion inférieure d'appui (15), s'insérant dans le passage traversant du silentbloc (50) et coopérant avec le silentbloc (50) de sorte à conférer une liaison encastrement entre le silentbloc (50) et la pièce externe femelle (14) du rivet de fixation (10), cette liaison encastrement étant localisée dans la partie inférieure de la pièce externe femelle (14) du rivet de fixation (10) et assurant un blocage du silentbloc (50) radialement et longitudinalement par rapport à la pièce externe femelle (14) du rivet de fixation (10).

2. Dispositif de fixation selon la revendication 1, **caractérisé en ce que** le silentbloc (50) est libre de se déplacer longitudinalement par rapport à la pièce externe femelle (14) du rivet de fixation (10) dans la partie supérieure de la pièce externe femelle (14) du rivet de fixation (10).

3. Dispositif de fixation selon l'une quelconque des revendications 1 ou 2, **caractérisé en ce que** le silentbloc (50) est libre de se déplacer radialement par rapport à la pièce externe femelle (14) du rivet de fixation (10) dans la partie supérieure de la pièce externe femelle (14) du rivet de fixation (10).

4. Dispositif de fixation selon l'une quelconque des revendications 1 à 3, **caractérisé en ce que** les éléments de blocage (20) sont solidaires d'au moins l'une des ailes mobiles (16).

5. Dispositif de fixation selon la revendication 4, **caractérisé en ce que** les éléments de blocage (20) se présentent comme un relief (21) s'étendant radialement vers l'extérieur en saillie à partir de la face externe de chaque aile mobile (16), ledit relief (21) s'étendant uniquement sur une fraction de la hauteur (H) de chaque aile mobile (16) comptée entre la portion inférieure d'appui (15) et sa zone d'articulation (17) à la partie supérieure de la pièce externe femelle (14) du rivet de fixation (10), ledit relief (21) étant adjacent à la portion inférieure d'appui (15).

6. Dispositif de fixation selon l'une quelconque des revendications 1 à 5, **caractérisé en ce que** la partie supérieure de la pièce externe femelle (14) du rivet de fixation (10) comprend une portion supérieure d'appui (19) s'étendant radialement en saillie de la pièce externe femelle (14) de sorte à emprisonner le silentbloc (50) entre la portion supérieure d'appui (19) et la portion inférieure d'appui (15) et **en ce que** la hauteur du silentbloc (50) est strictement inférieure à la distance (D) interposée entre la portion supérieure d'appui (19) et la portion inférieure d'appui (15) de sorte à ménager un jeu fonctionnel (J) entre l'extrémité supérieure du silentbloc (50) et la portion supérieure d'appui (19).

7. Dispositif de fixation selon l'une quelconque des revendications 1 à 6, **caractérisé en ce que** la portion inférieure d'appui (15) est solidaire des ailes mobiles (16) et comprend un rebord (151) s'étendant radialement vers l'extérieur en saillie à partir de la face externe de chaque aile mobile (16), les rebords (151) étant discontinus à l'égard d'une direction circonférentielle à l'axe longitudinal (X) du passage axial de la pièce externe femelle (14) du rivet de fixation (10).

## Patentansprüche

1. Befestigungsvorrichtung zum Befestigen eines Funktionsorgans (100) auf einem Träger (200), wobei die Befestigungsvorrichtung von einer Befestigungsniete (10), die geeignet ist, in einer Montageöffnung befestigt zu werden, die in dem Träger (200) eingerichtet ist, und von einem Silentblock (50) gebildet wird, der an die Befestigungsniete (10) gekoppelt ist und einen Aufnahme- und Festhaltebereich begrenzt, der geeignet ist, einen Teil des Funktionsorgans (100) aufzunehmen und festzuhalten, wobei die Befestigungsniete (10) umfasst:
- einen inneren Steckteil (11), der eine Verriegelungsstange (12) umfasst,
- einen äußeren Buchsenteil (14) in Röhrenform, umfassend:
- einen unteren Auflageabschnitt (15), der in einem unteren Teil des äußeren Buchsenteils (14) angeordnet ist und sich radial vorspringend von dem äußeren Buchsenteil (14) erstreckt, sodass er gegen eine Oberseite des Trägers (200) drückt,
- eine Vielzahl von beweglichen Flügeln (16), die innen zwischen sich einen axialen Durchgang begrenzen, der geeignet ist, die Verriegelungsstange (12) mit einer Möglichkeit zum Gleiten gemäß einer Längsachse (X) des axialen Durchgangs aufzunehmen, wobei die beweglichen Flügel (16) um den axialen Durchgang winkelig verteilt sind, indem sie in einem oberen Teil des äußeren Buchsenteils (14) der Befestigungsniete (10) angelenkt sind, sodass jeder bewegliche Flügel (16) eine Fähigkeit zum radialen Ausfedern von einer radial anfänglichen Ausgestaltung in eine radial beabstandete Ausgestaltung aufweist, wobei dieses Ausfedern durch eine Längsverschiebung der Verriegelungsstange (12) des inneren Steckteils (11) von einer angehobenen Entriegelungsposition in eine abgesenkte Verriegelungsposition gesteuert wird,
- Gegenhalteelemente (18), die jeweils fest mit den beweglichen Flügeln (16) verbunden und so ausgestaltet sind, dass sie gegen eine Unterseite des Trägers (200) drücken, wenn jeder bewegliche Flügel (16) seine radial beabstandete Ausgestaltung einnimmt,
wobei der Silentblock (50) eine Röhrenform aufweist, die einen durchsetzenden Durchgang begrenzt, um axial entlang des äußeren Buchsenteils (14) der Befestigungsniete (10) montiert zu werden und sich um den äußeren Buchsenteil (14) der Befestigungsniete (10) zu erstrecken,
wobei der untere Teil des äußeren Buchsenteils (14) der Befestigungsniete (10) Sperrelemente (20) begrenzt, die in der Nähe des unteren Auflageabschnitts (15) angeordnet sind, sich in den durchsetzenden Durchgang des Silentblocks (50) einfügen und mit dem Silentblock (50) so zusammenwirken, dass sie eine Steckverbindung zwischen dem Silentblock (50) und dem äußeren Buchsenteil (14) der Befestigungsniete (10) bewirken, wobei sich diese Steckverbindung in dem unteren Teil des äußeren Buchsenteils (14) der Befestigungsniete (10) befindet und eine radial und längs verlaufende Sperre des Silentblocks (50) in Bezug auf den äußeren Buchsenteil (14) der Befestigungsniete (10) sicherstellt.

2. Befestigungsvorrichtung nach Anspruch 1, **dadurch gekennzeichnet, dass** der Silentblock (50) in Bezug auf den äußeren Buchsenteil (14) der Befestigungsniete (10) in dem oberen Teil des äußeren Buchsenteils (14) der Befestigungsniete (10) längs frei verschiebbar ist.

3. Befestigungsvorrichtung nach einem der Ansprüche 1 oder 2, **dadurch gekennzeichnet, dass** das Silentblock (50) in Bezug auf den äußeren Buchsenteil (14) der Befestigungsniete (10) in dem oberen Teil des äußeren Buchsenteils (14) der Befestigungsniete (10) radial frei verschiebbar ist.

4. Befestigungsvorrichtung nach einem der Ansprüche 1 bis 3, **dadurch gekennzeichnet, dass** die Sperrelemente (20) fest mit mindestens einem der beweglichen Flügel (16) verbunden sind.

5. Befestigungsvorrichtung nach Anspruch 4, **dadurch gekennzeichnet, dass** sich die Sperrelemente (20) als ein Relief (21) darstellen, das sich radial nach außen vorspringend ausgehend von der Außenseite jedes beweglichen Flügels (16) erstreckt, wobei sich das Relief (21) ausschließlich auf einem Bruchteil der Höhe (H) jedes beweglichen Flügels (16) erstreckt, der zwischen dem unteren Auflageabschnitt (15) und seinem Anlenkbereich (17) am oberen Teil des äußeren Buchsenteils (14) der Befestigungsniete (10) gezählt wird, wobei das Relief (21) an den unteren Auflageabschnitt (15) angrenzt.

6. Befestigungsvorrichtung nach einem der Ansprüche 1 bis 5, **dadurch gekennzeichnet, dass** der obere Teil des äußeren Buchsenteils (14) der Befestigungsniete (10) einen oberen Auflageabschnitt (19) umfasst, der sich radial vorspringend von dem äußeren Buchsenteil (14) so erstreckt, dass der Silentblock (50) zwischen dem oberen Auflageabschnitt (19) und dem unteren Auflageabschnitt (15) eingeklemmt wird, und dadurch, dass die Höhe des Silentblocks (50) in jedem Fall geringer ist als der Abstand (D), der zwischen dem oberen Auflageabschnitt (19) und dem unteren Auflageabschnitt (15) liegt, sodass ein Funktionsspiel (J) zwischen dem oberen Ende des Silentblocks (50) und dem oberen Auflageabschnitt (19) eingerichtet wird.

7. Befestigungsvorrichtung nach einem der Ansprüche 1 bis 6, **dadurch gekennzeichnet, dass** der untere Auflageabschnitt (15) fest mit den beweglichen Flügeln (16) verbunden ist und einen Rand (151) umfasst, der sich radial nach außen vorspringend ausgehend von der Außenseite jedes beweglichen Flügels (16) erstreckt, wobei die Ränder (151) gegenüber einer Umfangsrichtung zur Längsachse (X) des axialen Durchgangs des äußeren Buchsenteils (14) der Befestigungsniete (10) unterbrochen sind.

## Claims

1. A fastening device for fastening an operational member (100) on a support (200), the fastening device consisting of a fastening rivet (10) capable of being fastened in a mounting orifice formed in the support (200) and of a silent block (50) coupled to the fastening rivet (10) and delimiting a receiving and holding zone capable of receiving and holding a portion of the operational member (100), the fastening rivet (10) comprising:
- a male inner part (11) comprising a locking rod (12),
- and a female outer part (14) of a tubular shape comprising:
- a bearing lower portion (15), arranged in a lower portion of the female outer part (14) and extending radially projecting from the female outer part (14) so as to be able to bear against an upper face of the support (200),
- a plurality of movable wings (16) internally delimiting between them an axial passage capable of receiving the locking rod (12) with a possibility of sliding according to a longitudinal axis (X) of the axial passage, the movable wings (16) being angularly distributed about the axial passage by being articulated in an upper portion of the female outer part (14) of the fastening rivet (10) so that each movable wing (16) has a radial deflection capacity from a radially initial configuration toward a radially spaced configuration, this deflection being controlled by a longitudinal displacement of the locking rod (12) of the male inner part (11) from an unlocking raised position toward a locking lowered position,
- counter-bearing elements (18) respectively secured to the movable wings (16) and configured so as to bear against a lower face of the support (200) when each movable wing (16) occupies its radially spaced configuration,
in which the silent block (50) has a tubular shape delimiting a through passage to be axially mounted along the female outer part (14) of the fastening rivet (10) and extends around the female outer part (14) of the fastening rivet (10),
in which the lower portion of the female outer part (14) of the fastening rivet (10) delimits blocking elements (20), arranged near the bearing lower portion (15), to be inserted into the through passage of the silent block (50) and cooperating with the silent block (50) so as to confer an embedding connection between the silent block (50) and the female outer part (14) of the fastening rivet (10), this embedded connection being located in the lower portion of the female outer part (14) of the fastening rivet (10) and ensuring a blocking of the silent block (50) radially and longitudinally with respect to the female outer part (14) of the fastening rivet (10).

2. The fastening device according to claim 1, **characterized in that** the silent block (50) is free to be displaced longitudinally with respect to the female outer part (14) of the fastening rivet (10) in the upper portion of the female outer part (14) of the fastening rivet (10).

3. The fastening device according to any one of claims 1 or 2, **characterized in that** the silent block (50) is free to be displaced radially with respect to the female outer part (14) of the fastening rivet (10) in the upper portion of the female outer part (14) of the fastening rivet (10).

4. The fastening device according to any one of claims 1 to 3, **characterized in that** the blocking elements (20) are secured to at least one of the movable wings (16).

5. The fastening device according to claim 4, **characterized in that** the blocking elements (20) are presented as a relief (21) extending radially outwards projecting from the outer face of each movable wing (16), said relief (21) extending only over a fraction of the height (H) of each movable wing (16) counted between the bearing lower portion (15) and its articulation zone (17) at the upper portion of the female outer part (14) of the fastening rivet (10), said relief (21) being adjacent to the bearing lower portion (15).

6. The fastening device according to any one of claims 1 to 5, **characterized in that** the upper portion of the female outer part (14) of the fastening rivet (10) comprises a bearing upper portion (19) extending radially projecting from the female outer part (14) so as to trap the silent block (50) between the bearing upper portion (19) and the bearing lower portion (15) and **in that** the height of the silent block (50) is strictly less than the distance (D) interposed between the bearing upper portion (19) and the bearing lower portion (15) so as to form an operational clearance (J) between the upper end of the silent block (50) and the bearing upper portion (19).

7. The fastening device according to any one of claims 1 to 6, **characterized in that** the bearing lower portion (15) is secured to the movable wings (16) and comprises a flange (151) extending radially outwards projecting from the outer face of each movable wing (16), the flanges (151) being discontinuous towards a direction circumferential to the longitudinal axis (X) of the axial passage of the female outer part (14) of the fastening rivet (10).
